(19) Europäisches Patentamt
European Patent Office
Office européen des brevets

(11) **EP 0 526 238 B1**

(12) **EUROPEAN PATENT SPECIFICATION**

(45) Date of publication and mention
of the grant of the patent:
**03.03.1999 Bulletin 1999/09**

(51) Int Cl.⁶: **G03G 15/01**, G03G 15/00

(21) Application number: **92307008.0**

(22) Date of filing: **31.07.1992**

(54) **A color electrophotographic apparatus**

Elektrophotographisches Farbgerät

Appareil à couleurs électrophotographique

(84) Designated Contracting States:
**DE FR GB IT**

(30) Priority: **01.08.1991 JP 193186/91**
**23.10.1991 JP 304160/91**

(43) Date of publication of application:
**03.02.1993 Bulletin 1993/05**

(73) Proprietor: **CANON KABUSHIKI KAISHA**
**Tokyo (JP)**

(72) Inventors:
• **Gu, Sono, c/o Canon Kabushiki Kaisha**
**Ohta-ku, Tokyo (JP)**
• **Sakurai, Masaaki, c/o Canon Kabushiki Kaisha**
**Ohta-ku, Tokyo (JP)**
• **Inoue, Masahiro, c/o Canon Kabushiki Kaisha**
**Ohta-ku, Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
EP-A- 276 107          EP-A- 276 112
EP-A- 0 360 572        EP-A- 0 370 482
EP-A- 0 426 435        EP-A- 0 500 134

• PATENT ABSTRACTS OF JAPAN vol. 13, no. 135
(P-851)(3483) 5 April 1989
• PATENT ABSTRACTS OF JAPAN vol. 6, no. 229
(P-155)(1107) 16 November 1982

## Description

The present invention relates to an image forming apparatus such as a copying machine or the like, more particularly to an electrophotographic apparatus which comprises control means for controlling image forming conditions in accordance with changes in a parameter which affects the image formation performance detected by a sensor.

Various electrophotographic machines have been proposed. Among them, an electrophotographic type laser beam printer is widely used in which an electrophotographic photosensitive member is exposed to image light so that an electrostatic latent image is formed thereon, and the latent image is visualized by development. Such a laser beam printer has advantages that the image quality is high and that the recording speed is high, and therefore, it is widely used as usual printers or an output devices for copying machines.

In such an image forming apparatus, the produced images always have a stabilized image density. For example, the reflection image density of the produced image is to be stabilized at the maximum (Dmax = 1.5, for example) under all of the ambient conditions. To accomplish this, a temperature sensor, a humidity sensor, a potential sensor and/or image density sensor or the like are provided in the image forming apparatus to detect the ambient conditions of the image forming apparatus, and in response to the result of detection, the developing contrast is adjusted on the basis of the charging condition for the photosensitive drum, the developing condition and the image fixing condition or the like, so that the image density change due to the ambient-condition change is compensated for, thus assuring the stabilized image forming operations.

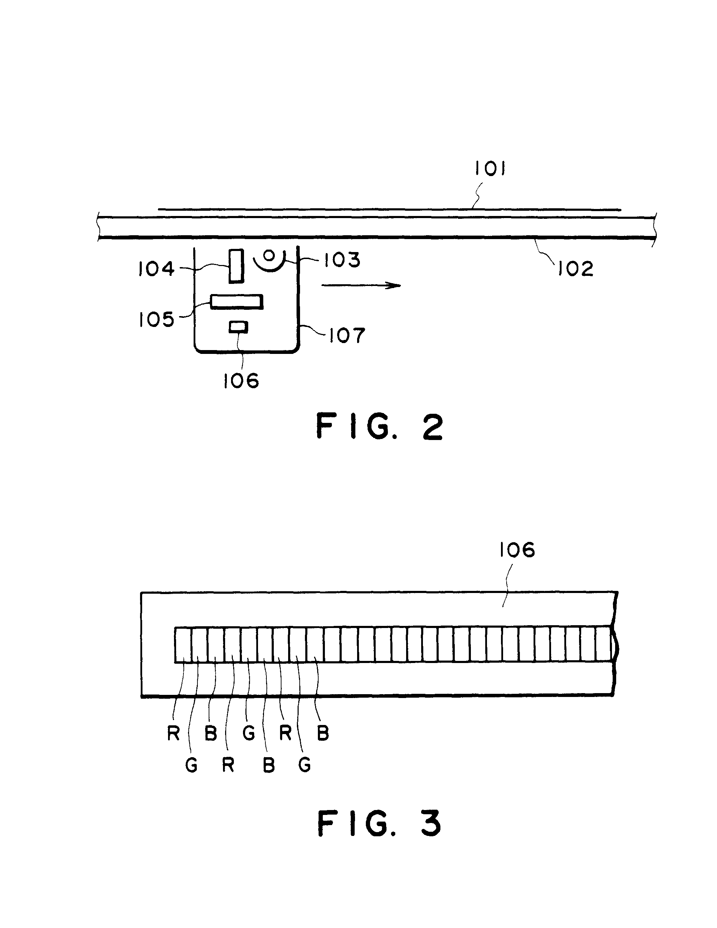

Referring to Figures 2 and 3, the conventional image forming apparatus will be described.

Figure 2 is a sectional view of an image reader in a color image processing means. Referring to this Figure, the original reading process will be described. When a copy key (not shown) on an operation panel is depressed, the illuminating light source 103 illuminates an original 101 having a color image. The light reflected by the original 101 is imaged on a charge coupled device (CCD, contact type CCD color sensor) through an imaging element array 104 and an infrared component removing filter 105. An optical unit 107 scans the original 101 on the platen 102 in the direction indicated by an arrow.

As shown in Figure 3, the CCD 106 is provided with red (R), green (G) and blue (B) transmission filters for each picture element.

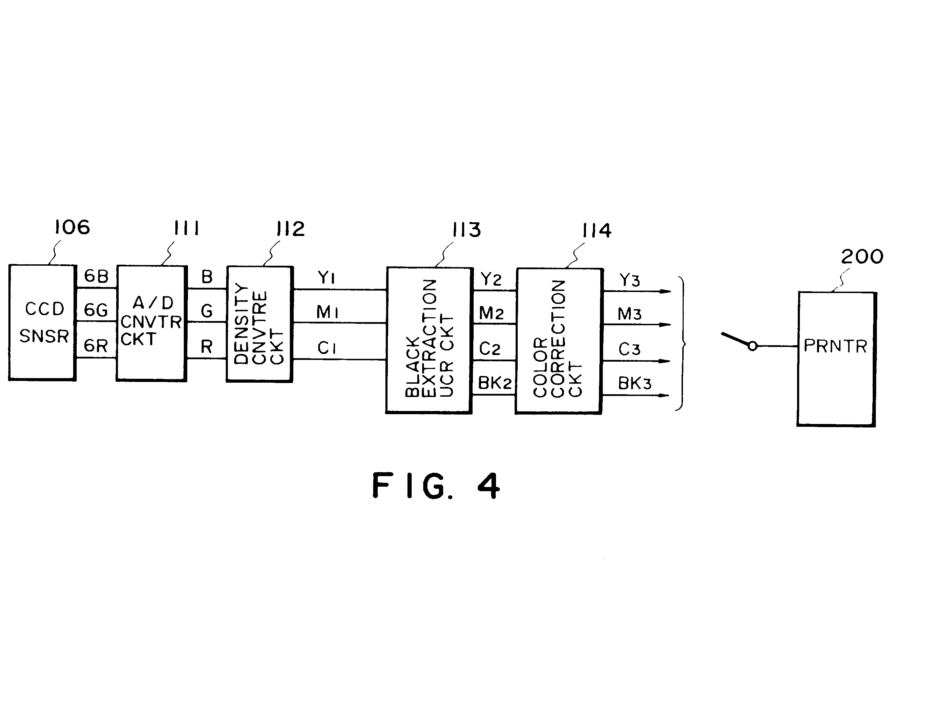

Together with the scan of the original 101, the electric signals from the CCD 106 are processed by a signal processing circuit shown in Figure 4.

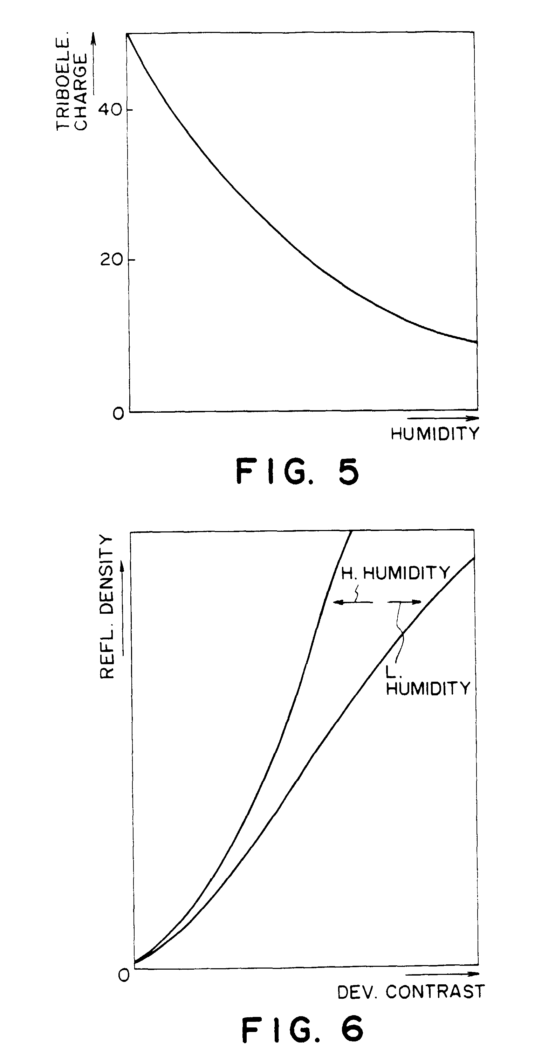

In Figure 4, 6B, 6G and 6R designate signals from B, G and R elements on the CCD 6. Subsequently, the B, G and R signals are introduced into an A/D converter circuit 111 and a density converting circuit 112, so that they are converted to digital Y1, M1 and C1 signals. The Y1, M1 and C1 signals are transmitted to a circuit 113 which effects black component extraction and UCR (background component removal) operation, so that Y2, M2, C2 and BK2 signals are produced through the following processing:

$$Y2 = Y1 - k_3 \min (Y1, M1, C1)$$

$$M2 = M1 - k_3 \min (Y1, M1, C1)$$

$$C2 = C1 - k_3 \min (Y1, M1, C1)$$

$$BK2 = k_1 \min (Y1, M1, C1) + k_2$$

Where min (Y1, M1, C1) is the minimum level signal among Y1, M1 and C1 signals. $k_1$, $k_2$ and $k_3$ are predetermined coefficients.

Then, Y2, M2, C2 and BK2 signals are transmitted to color correction circuit 114 for correcting spectral distribution in consideration of the used color separation filter and the coloring material used in the image forming means. The following processing operation is carried out.

$$\begin{pmatrix} Y3 \\ M3 \\ C3 \\ BK3 \end{pmatrix} = \begin{pmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{pmatrix} \begin{pmatrix} Y2 \\ M2 \\ C2 \\ BK2 \end{pmatrix}$$

Where $a_{11}$ - $a_{44}$ is a masking coefficient for color correction.

The signals Y3, M3, C3 and BK3 signals thus obtained are visualized image forming means 200 of a color thermal printer, color ink jet printer, a color laser beam printer or the like.

In such image forming means, in order to improve the image quality, small particle size toner is used. With such toner particles, the triboelectric charge significantly changes in accordance with the ambient condition, particularly the humidity.

Figure 5 is a graph in which the abscissa represents ambient humidity, and ordinate represent the triboelectric charge of the developer (toner). Therefore, the developing characteristic curve (V-D curve) indicating the relation between the development contrast and the reflection density changes to that shown in Figure 6.

On the other hand, the Dmax has been controlled by controlling the developing contrast in the following manner.

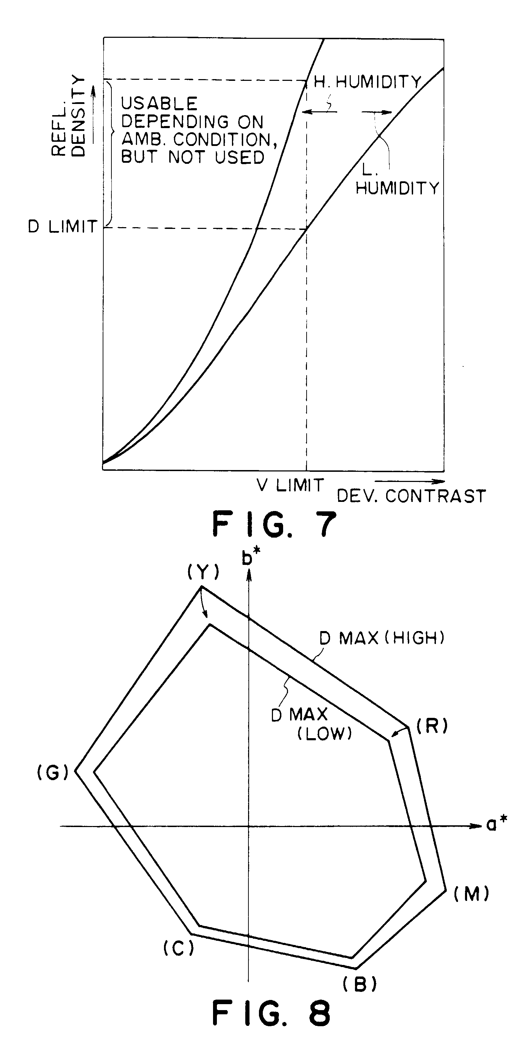

As shown in Figure 7, the maximum development contrast potential Vlimit is determined on the basis of latent image conditions such as the sensitivity and the charging property of the photosensitive member, the charging power of the charger and the image exposure strength.

Then, using the V-D curve of Figure 6, the Dlimit for Vlimit is determined under low humidity condition. This Dlimit is taken as the Dlimit of this apparatus, and the development contrast-is controlled so that the Dlimit is constant under all ambient conditions.

Then, under the low humidity condition, the Dlimit is produced using Vlimit, but under the other ambient conditions, as will be understood from Figure 7, the Dlimit is also produced despite the fact that a higher density than Dlimit can be provided if Vlimit is used. Therefore, the highest performance of the output means is not used.

Depending on the difference of the Dmax, the reproducible color range changes as shown in Figure 8. If Dmax is low, the reproducible color range becomes narrower with the result of the difficulty in faithfully reproducing the original image.

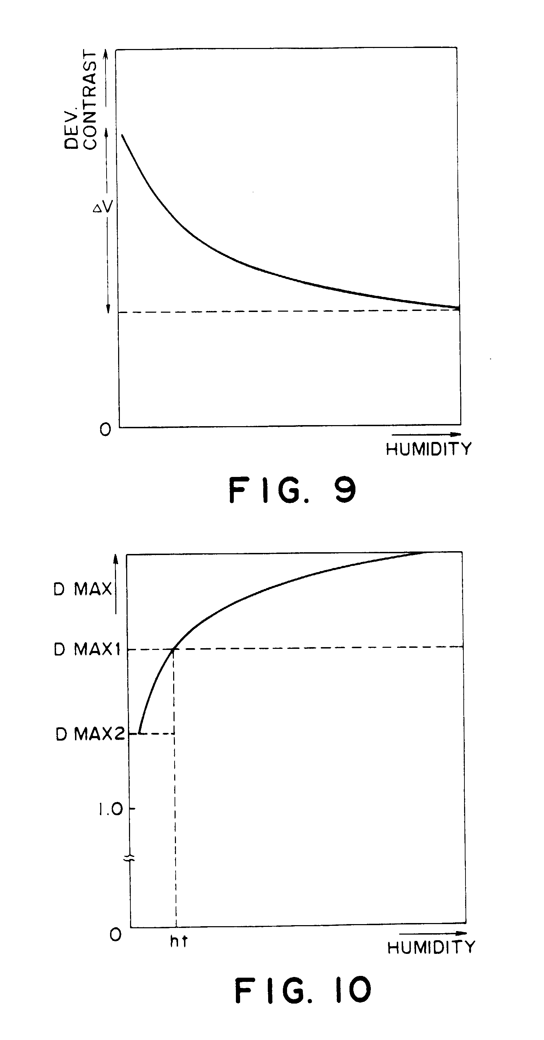

Furthermore, in order to maintain the constant Dlimit under all the ambient conditions, the development contrast guarantee region $\Delta V$ has to be large, as will be understood from Figure 9.

When the charging property of the photosensitive member changes, the free limit assuring the constant Dlimit becomes not possible. Then, it is discriminated that the service life of the photosensitive member ends. Therefore, the photosensitive member is not used up to its capacity.

The above-described masking coefficient is selected so that the color difference from the original image becomes minimum in the color reproducing range for the Dlimit of the image forming means. In other words, there are optimum masking coefficient and LOG converting coefficient which make the color difference from the original image smallest, for each of the Dmax level.

In addition, the masking coefficient and LOG conversion coefficient are selected on the assumption that the color distribution of the original image and the color reproducing range of the image forming means are known and constant. Therefore, when the color distribution of the original image is in the color reproducing range of the image forming means, the image is faithfully reproduced. However, when the color distribution range of the original image is small, or when the color reproducing range of the image forming means changes, the tone reproducibility becomes insufficient, or the image quality is deteriorated. On the other hand, when the color range of the original exceeds the colour reproducing range of the image forming apparatus, the colour reproduction with reduced colour reproducing range is effective. However, it means that an unnecessary colour reduction is effected for an original covered by the colour reproducing range of the image forming apparatus, and therefore, the brightness and the rightness decreases.

In addition, the image quality sequentially deteriorates when a produced copy is copied in the case of the copying machine.

EP-A-0276107 discloses an electrophotographic apparatus for producing a colour image comprising an electrophotographic photosensitive member, image forming means for forming a colour toner image on said photosensitive member, transfer means for transferring the colour toner image onto a transfer material, detecting means for detecting a parameter affecting the image formation performance. In order to compensate for ambient humidity changes the surface potential of the photosensitive member is read and used to control the driving of the laser for forming a latent image on the photosensitive member. In order to maintain the image density at different humidities the laser power is switched to provide a lower power for high humidity and a higher power for low humidity. The image density is thus held constant and this arrangement suffers from the disadvantages discussed hereinbefore.

Accordingly, it is a principal object of the present invention to provide an image forming apparatus in which the maximum image density of an image which can be formed on a photosensitive drum is changed in accordance with a parameter affecting the image formation performance so that the colour reproducibility is improved.

It is another object of the present invention to provide an image forming apparatus capable of high quality colour reproduction.

The present invention provides an electrophotographic apparatus for producing a colour image comprising: an electrophotographic photosensitive member; image forming means for forming a colour toner image on said photosensitive member, wherein the toner image has an image density which lies within a range of image densities, which range varies in dependence upon a parameter affecting the image formation performance; means for setting image formation control parameters such that the toner image will have a target maximum image density within said range; transfer means for transferring the colour toner image onto a transfer material; detecting means for detecting the parameter affecting the image formation performance; and control means for controlling the formation of said toner image on said photosensitive member in dependence upon the parameter detected by said detecting means; characterised in that said control means is operable to change the target maximum image density used in said setting means in accordance with the parameter detected by said detecting means.

Embodiments of the present invention will now be described with reference to the drawings in which:

Figure 1 is a sectional view of an image forming apparatus according to an embodiment of the present invention.

Figure 2 is a sectional view of an image reader of image processing means.

Figure 3 illustrates a charge coupled device (CCD).

Figure 4 illustrates conventional image processing.

Figure 5 is a graph of a relation between triboelectric charge and ambient humidity.

Figure 6 is a graph of a relation between the ambient humidity and the developing property.

Figure 7 illustrates a conventional device.

Figure 8 illustrates a problem with conventional device.

Figure 9 shows a required development contrast in relation to humidity.

Figure 10 shows a maximum density change in relation to humidity.

Figure 11 is a graph of a relation between the development contrast and the ambient humidity in accordance with a first embodiment of the present invention.

Figure 12 illustrates a potential control.

Figure 13 is a block diagram of a device according to the first embodiment of the present invention.

Figure 14 illustrates LUT according to the embodiment of the present invention.

Figure 15 is a sectional view of an image forming apparatus according to a second or third embodiment of the present invention.

Figure 16 is a graph of a second embodiment.

Figure 17 shows a triboelectric charge amount measuring means.

Figure 18 is a graph of the third embodiment of the present invention.

Figure 19 shows another example of the triboelectric charge amount measuring means.

Embodiment 1

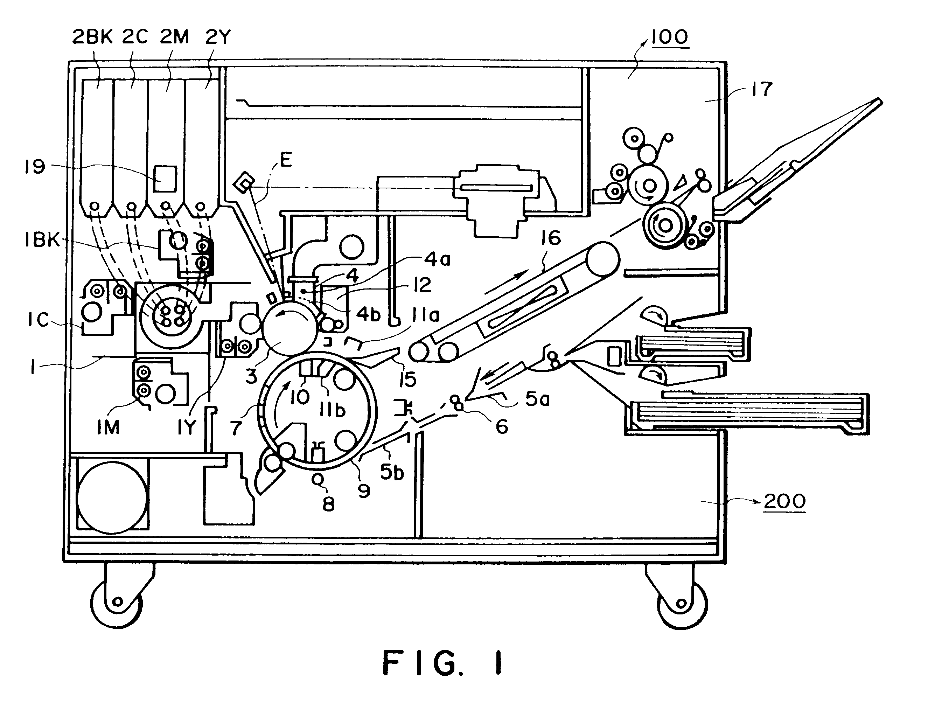

Referring to Figure 1, a first embodiment of the present invention will be described.

Referring to Figure 1, there is shown a color image forming apparatus according to an embodiment of the present invention. It comprises a reader 100 including the image processing means. The image reading portion thereof is shown in Figure 2. Designated by reference numeral 200 is a printer (image forming means).

A rotary type developing device 1 includes a yellow developing device IY, a magenta developing device 1M, a cyan developing device 1C and a black developing device 1K. The developer is a two component developer containing non-magnetic toner and magnetic carrier particles. The developing devices each comprises a non-magnetic rotatable sleeve and a magnet stationarily disposed therein, as in known developing device. The developing device further comprises a developer (toner) supplying device 2 for supplying the toner to the developing device 1.

The general description will be made as to the operation of the overall image forming apparatus in a full-color mode.

A photosensitive drum 3 having an OPC photoconductive layer rotates in the direction indicated by an arrow. The photosensitive member is uniformly charged by a charger 4. The detailed description there will be made hereinafter.

The photosensitive member is exposed through a digital optical system to a laser beam E which is modulated, so that an electrostatic latent image is formed on the photosensitive drum 3. The latent image is developed by an yellow developing device 1Y a transfer material having been fed by a feeding roller 6, sheet feeding guides 5a and 5b, is caught by a gripper 7 at a predetermined timing, and then is attracted and wrapped on the transfer drum 9 electrostatically by a roller 8 and the opposite electrode.

The transfer drum 9 rotates in the direction indicated by an arrow in synchronism with the photosensitive drum 3. The visualized image provided by the yellow developing device 1Y is transferred onto the transfer material by a transfer charger 10 at a transfer position. The transfer drum 9 continues to rotate for the purpose of next color image transfer (magenta image transfer in the Example of Figure 1).

The photosensitive drum 3 is then cleaned by a cleaning means 12, and is charged by a charger 4. Similarly to the yellow image, it is then exposed to the magenta image signal beam. During this period, the developing device 1 rotates to place the magenta developing device IM to the developing position. Then, the magenta latent image is developed. The same process is repeated for the cyan and black color components. After the four color images are transferred. The discharger IIa and 11b operate to release the transfer material from the gripper 7, and the transfer material is separated from the transfer drum 9 by separation pawls 15. The transfer material is conveyed on a conveyer belt 16 to an image fixing device 17. Thus, the series of full-color print operation is completed.

The image forming apparatus of this embodiment is provided with image forming apparatus performance detecting means in the form of an ambient condition detecting means 19 including a humidity sensor and a temperature sensor. The ambient condition detecting means 19 functions to detect the ambient conditions influential to the image forming conditions. The sensors detect the ambient temperature and humidity for a predetermined period of time to determine the ambient conditions in which the apparatus is placed.

The structures of the reader 100 is the same as described in conjunction with Figures 2, 3 and 4, and therefore, the detailed description is omitted for simplicity.

The control operation of the apparatus of this embodiment will be described for a reader 100 and a printer 200, respectively.

First, the description will be made as to the image formation performance discriminating method in the printer 200.

Figure 10 is a graph of Dmax relative to the ambient humidity, when Vlimit is used.

For example, the image forming conditions are controlled with Dmax being Dmax1 for the humidity higher than $h_t$ and with Dmax being Dmax2 (Dmax1 > Dmax2). The humidity $h_t$ is predetermined as a point where the curve inclination abruptly changes in Figure 10, for example. In this embodiment Dmax2 is the lower limit of Dmax. As for the control method, the developing contrasts for providing Dmax1 and Dmax2 are measured beforehand.

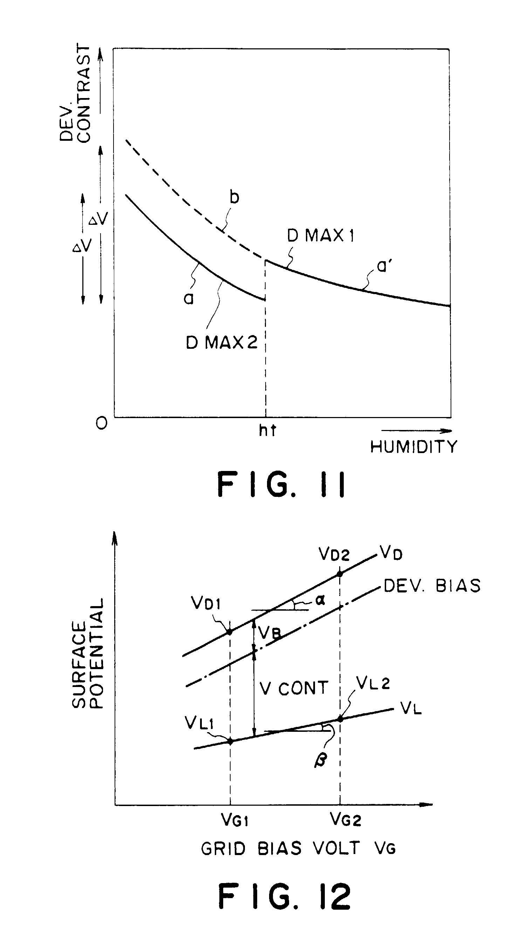

Figure 11 shows developing contrasts for providing the target Dmax (Dmax1 and Dmax2) depending on the humidity. In the Figure 11, a curve b indicates the development contrast for providing a constant image density Dmax1 shown in Figure 10; curves a and a' are development contrasts for providing Dmax1 and Dmax2, respectively. From the Figure, the development contrast range $\Delta V$ for assuring the density Dmax2 is narrower than the development contrast range $\Delta V$ for the density Dmax1.

In order to provide the target contrast, the following potential control is carried out. As shown in Figure 12, the dark potential and the light potential of the photosensitive drum changes linearly relative to the grid bias applied to the grid 4b of the corona discharger 4. This is used to control the contrast using the grid bias. In Figure 12, the abscissa represents the grid bias voltage VG, the ordinate represents the surface potential of the photosensitive member. The potential VD is the dark potential, that is, the potential of the portion not exposed to the light, and VL is a light potential, that is, the potential of the portion exposed to the light.

Assuming that $\alpha$ is an inclination of VD relative to VG and that $\beta$ is an inclination of VL, $\alpha > \beta$. In view of this, before the printing operation is carried out, the potentials VD and VL are measured for grid voltages VG1 and VG2 which have been predetermined, so that the charging curve of the potentials VD and VL relative to the grid voltage is determined as shown in Figure 12. When the image is formed thereafter, the charging curve is used to determine such a grid voltage that the development contrast, that is, VD - VL is the predetermined value. On the basis of the processing and determination of the grid voltage, the grid bias is controlled.

Furthermore, in order to prevent the toner from being deposited on the white background, the developing bias is controlled to be lower than VD by a predetermined level.

The target contrast when the above-described potential control is performed, is changed depending on the humidity, as shown in Figure 10. The target Dmax here is Dmax1 or Dmax2 depending on the humidity higher or lower than humidity $h_t$.

If the target Dmax switch is set for the low humidity which is not frequently used, the image is not so frequently changed in use, and the performance of the apparatus is brought about to its maximum extent. Here, a flag P representing the performance discrimination results in the printer 200 is set to 1 when the target Dmax is Dmax1, and it is set to 2 when the target Dmax is Dmax2.

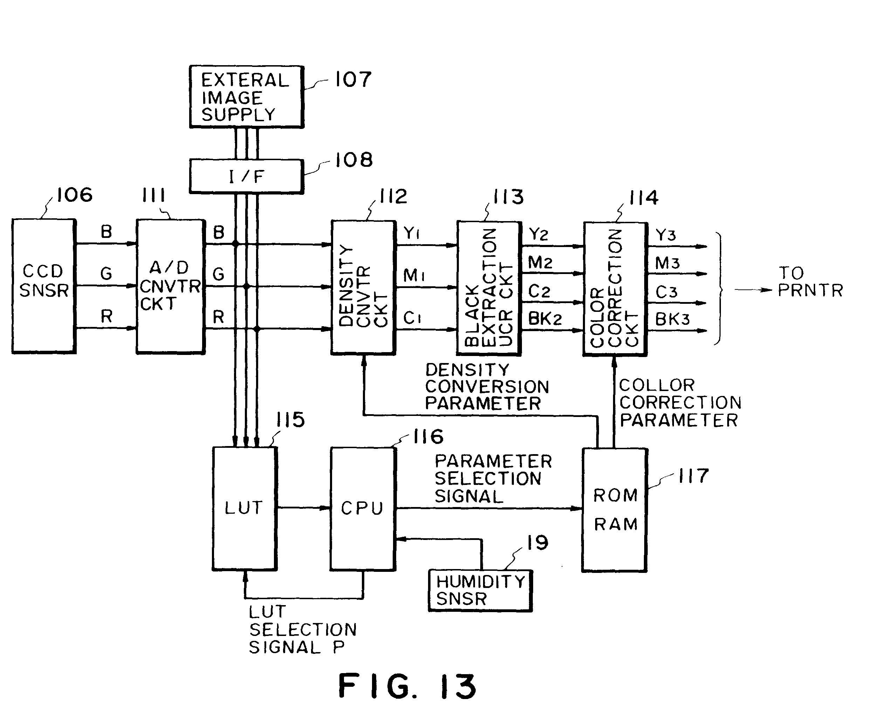

Referring to Figure 13, the original discriminating method by the original discriminating means in the reader will be described. The R, G and B signals supplied A/D converter circuit 111 having received the output from the CCD sensor 106 or the R, G or B signals supplied through an external image input device 107 through I/F circuit 108, are fed to a look-up table (LUT) 115.

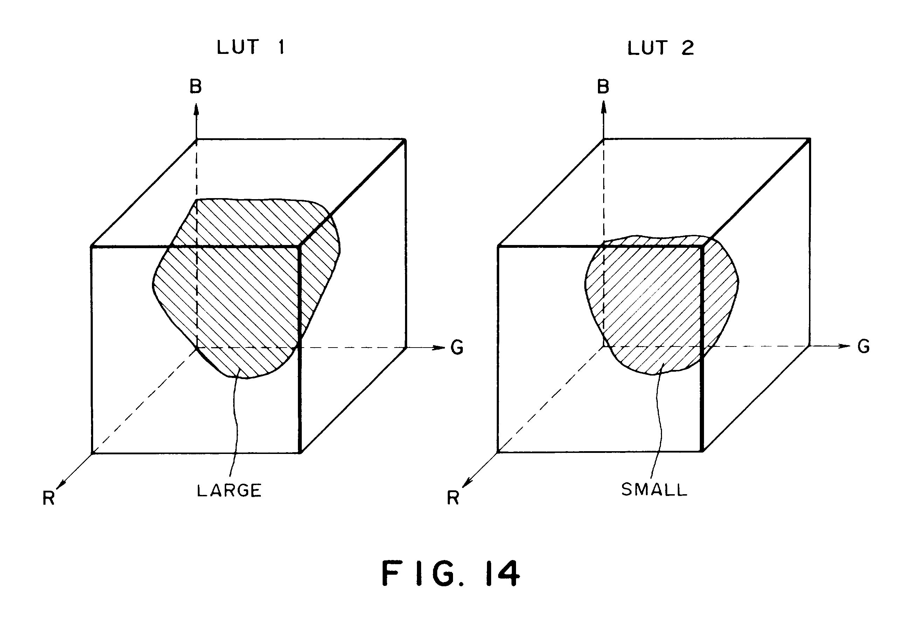

Figure 14 shows the data of the look-up table (LUT). Each of the addresses has 1 or 0 one bit data. The hatched zone contain data 1, and the zone is different depending on the result of discrimination by the discriminating means in the printer 200. In other words, when the flag P is 1, the LUT 1 is selected, while P = 2, the LUT 2 is selected. The LUT has been established by determining the RGB signals when the color is read in the color reproducible range with the target Dmax being Dmax1, and by writing the data 1. Similarly, the LUT2 has been made by determining the signals with the target Dmax being Dmax2. The outputs of the look-up table are sampled for the entire surface of the color image original or at a predetermined proper area, and are integrally added. The added value corresponds to the number of picture elements contained in the color reproducing range of the printer 200. A value $\alpha$ = sum/sampling number represents the occupying ratio of the color reproducing range relative to the reproducing capacity of the printer 200. Therefore, when $\alpha$ = 1, the original is all within the current color reproducible range of the printer 200. With the ratio $\alpha$ approaching 0, the number of picture elements out of the current color reproducible range of the printer is large in the original image.

The CPU 116 compares the ratio $\alpha$ with a predetermined threshold level. When the ratio $\alpha$ is larger than the threshold, that is, the original image is within the current color reproducing range of the printer 200, the faithful color reproduction operation control is carried out. When the value a is smaller than the threshold, that is, when the original image is outside the current color reproducible range of the printer, the color reproducing operation after the compression reduction operation.

As for the color reproducing process, there are various techniques usable. For the purpose of the faithful color reproducing method, there are nonlinear masking method in which a high order masking is carried out for the density conversion signal for the R, G and B components, a table conversion method in which the Y, M and C signal data stored in memory are directly read out from the RGB signals.

As for the color reproduction with the compressing process, there is a method in which when the R, G and B density conversion signals are produced, the-density range of the original is compressed into the color reproducible density range and a method in which the compression process is carried out on a color space as a pre-process for the masking method or the table conversion method.

More particularly, when it is discriminated that the color range of the original expands widely from the ratio $\alpha$ and the threshold level, the CPU 116 reads out the coefficient for the compressing color reproduction from a ROM 117 which stores a plurality of image processing coefficient for the faithful color reproduction and the compressing color reproduction ($\gamma$ correcting coefficient, the density conversion coefficient, the color correction coefficient or the like, for example). The read out coefficients are written in the density conversion circuit 112 or the color correction circuit 114 or the like.

By doing so, the proper correction is made to the image forming means in consideration of the nature of the original image, and therefore, the image forming operation can be operated with the maximum performance.

As described, according to the embodiment of the present invention, the consideration is paid to the fact that the color reproducible range of the image forming means is different depending on the ambient condition, and the color reproducible range of the image forming means is changed to its maximum extent depending on the ambient conditions.

In addition, when the color distribution of the input image exceeds the color reproducible range of the image forming means, the density range is compressed entirely, and the total color balance in the reproduced image is maintained proper.

Embodiment 2

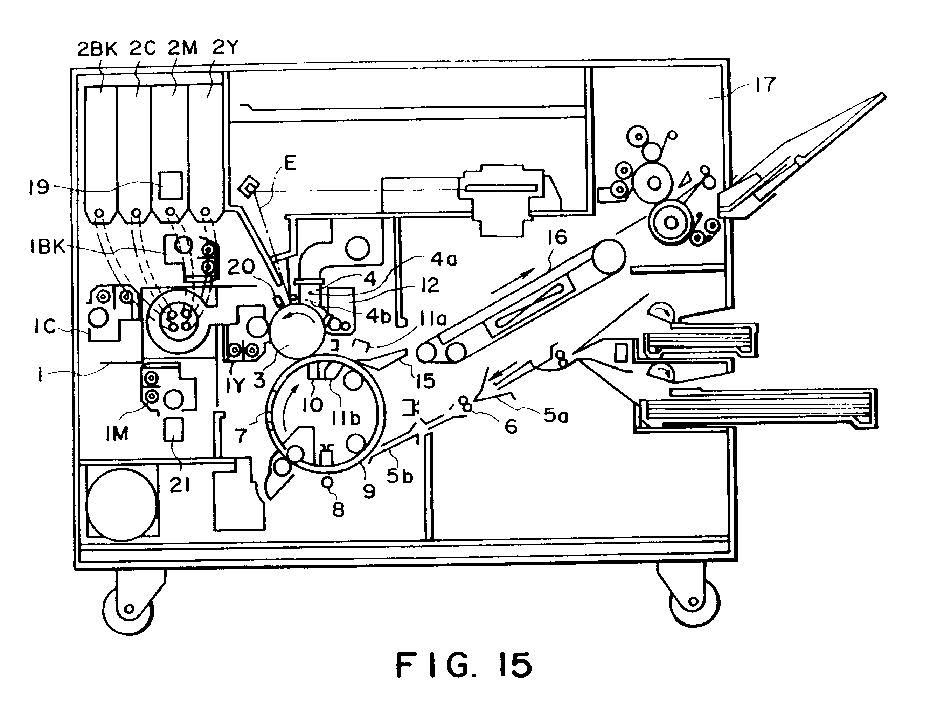

Referring to Figure 15, the second embodiment of the present invention will be described.

With respect to Figure 15, the same description as in Figure 1 is omitted for simplicity. In the printer 200, the power or performance detecting means 20 comprises a potential sensor for measuring the potential of the charged photosensitive drum. By the sensor 20, the potential of the charged photosensitive drum is measured to discriminate the charging property of the photosensitive drum.

Using the relation of Figure 12, that is, the relation that the grid bias voltage VG applied to the charger 4 and the charge potentials VD and VL of the photosensitive drum are linearly related, the following process is carried out.

First, the light portion potential VL1 at the time when the grid bias is VGt is measured by the potential sensor 20. Then, in a processing circuit not shown, the measurement is compared with a predetermined level VLt. When IVL1I > IVLtI, the target Dmax is set to Dmax2. When IVL1I $\leq$ IVLtI, it is set to Dmax1. Then, the image forming conditions are set by the potential control as in Embodiment 1.

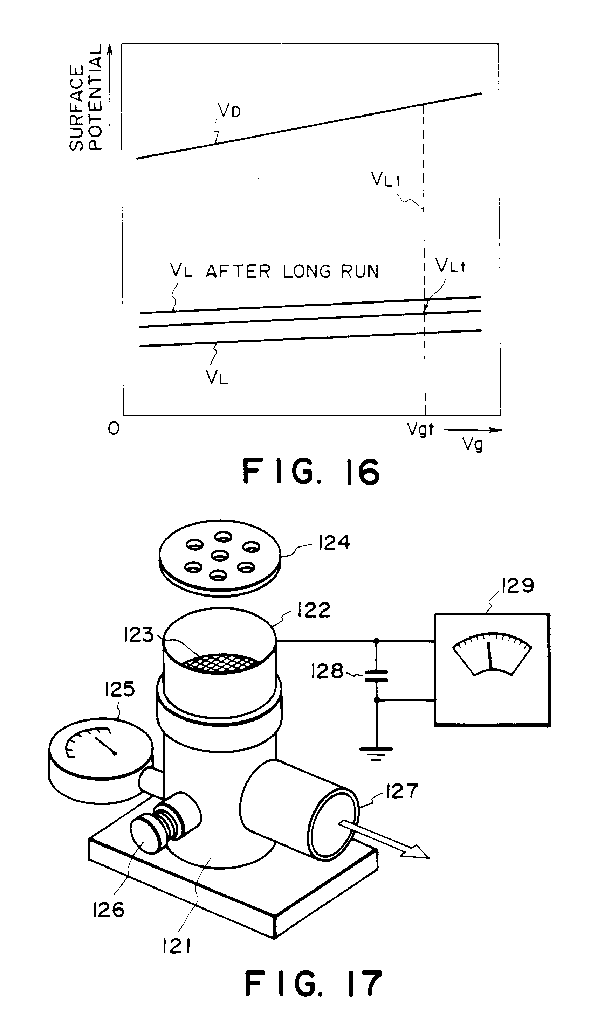

Figure 16 shows the charging property of the photosensitive drum when the exposure amount and the grid bias are constant. Thus, the charging property is dependent on the ambient condition or the used period. The dark portion potential VD is substantially constant, and mainly, the light portion potential VL changes for the above reason.

Since the dark portion potential VD is substantially constant, the development contrast IVD - VLI is large when the IVL1I is small. As shown in Figure 7, the development contrast and the Dmax are so related that the Dmax is high when the development contrast is large under the same ambient condition.

Therefore, Dmax can be set high when IVL1I is small.

Accordingly, since the charging property of the photosensitive drum is detected, and the image forming operation is carried out in accordance with the detection, the image can be produced with the maximum performance of the photosensitive drum.

Similarly to Embodiment 1, when the target Dmax is Dmax1, the flag P1 is set to 1, and when the target Dmax is set to Dmax2, the flag P is set to 2, and the similar process is carried in the reader 100 as in Embodiment 1.

Embodiment 3

The description will be made as to the case when the performance detection means is a triboelectric charge amount sensor for detecting the developing performance.

The triboelectric charge amount detecting method will be described, referring to Figure 17. A measuring container 122 made of metal having a screen 123 of 500 mesh at the bottom, is prepared. A predetermined amount of the toner and carrier particles (the weight ratio 1:9), that is the developer to be measured, is set in a polyethylene bin, and they are placed in the measuring container 122. The total weight of the measuring container is measured (W1). Then, a sucking device 121 which is made of electric insulating material at a portion contacting the measuring container 122, is used to suck the developer through the sucking aperture 127. By controlling the weight control valve 126, the pressure of a vacuum system 125 is controlled to be 250mmHg. With this state, the sucking operation is continued to a sufficient extent to remove the toner. The read of the potentiometer 129 is V (volt). Here, a capacity 128 has a capacity of C ($\mu$F). The total weight of the measuring container 122 at this time is measured (W2). Then, the triboelectric amount Q ($\mu$c/g) of the toner is calculated as follows:

$$Q\ (\mu c/g) = (C \times V)/(W1 - W2)$$

The calculation is carried out by processing circuit of an unshown CPU.

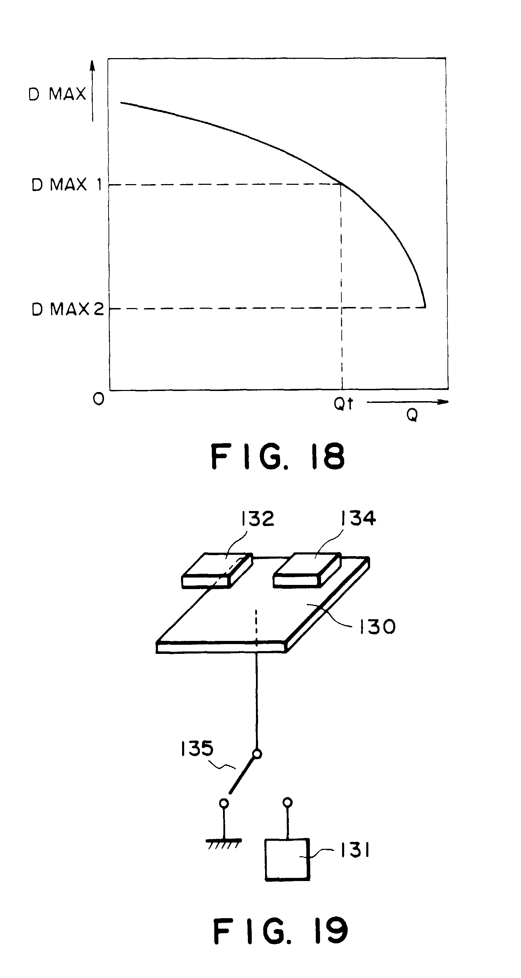

As for the relation between the triboelectric charge amount of the toner detected through the abovedescribed process and the Dmax when the V contrast is constant, it is known that the Dmax decreases with increase of the triboelectric charge amount Q, as shown in Figure 18. The triboelectric charge amount Q changes depending on the state in which the developer is used and the ambient condition or the like, but it is seldom that it becomes extremely large, under the usual conditions. Therefore, when the measured triboelectric charge amount Q is larger than Qt (Q > Qt) where Qt is about the maximum of the usual triboelectric charge amount, the target Dmax is set to Dmax1, and when Q $\leq$ Qt, it is set to Dmax 2. When the Dmax1 is selected, the flag P1 is set to 1, and when the Dmax2 is selected, the flag P is set to 2. In the reader 100, the same processing operation as in the foregoing embodiment is carried out.

Referring to Figure 19, the description will be made as to another embodiment of the triboelectric charge amount sensor. The developing electrode 130 is faced to the developing sleeve of the developing device 1 with a space therebetween which is equivalent to the gap between the photosensitive drum 3 and the developing sleeve. With this state, the developing sleeve is supplied with a bias voltage as in the developing operation. The toner is then deposited on the developing electrode 130. The density of the toner deposited is measured by a density detector 132. Then, the weight Mt on the developing electrode plate 130 is determined from a predetermined relation between the amount of the toner per unit area and the density and the area of the deposited toner. Furthermore, the surface potential of the toner image on the developing electrode plate 130 is detected by a surface potential detector 134. Then, the total electric charge amount qt of the toner image is determined on the basis of the predetermined specific gravity, the toner weight and the area.

The triboelectric charge amount Q can be determined on the basis of the charge amount qt and the weight Mt, the triboelectric charge amount Q can be determined.

After the triboelectric charge amount Q is determined, the switch 135 is operated to connect the power source 131 with the developing electrode 130 so that the developing electrode plate 130 is supplied from the voltage source 130 with the voltage equal to the bias voltage. The developing sleeve is electrically grounded to return the toner from the electrode plate 130 to the developing sleeve.

As for the toner density detector 132, the conventional light source and the photoreceptor is used. The potential detector 134 may be a known type in which the electrostatic capacity is used as in the case of detecting the potential of the photosensitive member.

Embodiment 4

According to the foregoing embodiments, the image forming apparatus performance or power detecting means detects the ambient condition, the surface potential or the developing performances separately. It may be capable of detecting two or more of them in combination to determine the image forming condition. The similar results can be provided. The ambient conditions may include the humidity and the temperature or the like.

In the foregoing embodiments, the target Dmax is switched in two steps, in response to which the image processing mode is switched in two steps. However, more steps may be used.

The look-up table comprises a ROM and a RAM, but the look-up table may be stored in the CPU.

As described in the foregoing, according to the embodiments of the present invention, the control means controls so that the image forming operation is carried out with substantially its maximum performance in accordance with the results of the performance detecting means, since the upper limit is not constant as in the conventional apparatus. Therefore, the good images can be provided over wider range.

Particularly, in the full-color image forming apparatus, the color reproducible range is increased to faithfully reproduce the color image in a wider range of the originals.

According to the embodiments of the present invention, the optimum image processing operation is carried out irrespective of the nature of the original image, so that the maximum performance of the image forming apparatus can be used, and therefore, the good quality images can be provided for wider range of the originals.

In the foregoing embodiments, the description has been made as to the type of the apparatus in which the images are transferred onto the transfer material each after the formation of the toner image. However, the present invention is applicable to a type in which the color images are formed on the photosensitive member, and the images are transferred at once onto the transfer material.

Also, the present invention is applicable to a color image forming apparatus using another type of electrophotographic photosensitive member.

While the invention has been described with reference to the structures disclosed herein, it is not confined to the details set forth and this application is intended to cover such modifications or changes as may come within the purposes of the improvements or the scope of the following claims.

## Claims

1. An electrophotographic apparatus for producing a colour image comprising: an electrophotographic photosensitive member (3); image forming means (1, 4) for forming a colour toner image on said photosensitive member (3), wherein the toner image has an image density which lies within a range of image densities, which range varies in dependence upon a parameter affecting the image formation performance; means for setting image formation control parameters such that the toner image will have a target maximum image density (Dmax1, Dmax2) within said range; transfer means (9) for transferring the colour toner image onto a transfer material; detecting means (19, 20) for detecting the parameter affecting the image formation performance; and control means (116) for controlling the formation of said toner image on said photosensitive member in dependence upon the parameter detected by said detecting means; characterised in that said control means (116) is operable to change the target maximum image density (Dmax1, Dmax2) used in said setting means in accordance with the parameter detected by said detecting means (19, 20).

2. An apparatus according to claim 1, wherein said detecting means (19,20) is adapted to detect an ambient condition.

3. An apparatus as claimed in claim 2, wherein said detecting means (19,20) is adapted to detect ambient humidity and/or temperature.

4. An apparatus according to claim 1, wherein said detecting means (19,20) is adapted to detect a charging property of said electrophotographic photosensitive member (3).

5. An apparatus according to claim 1, wherein said image forming means (1,4) includes a charger (4) for charging the electrophotographic photosensitive member (3), exposure means for exposing the photosensitive member to form an electrostatic image, and a developing device (1) for developing the electrostatic latent image with toner.

6. An apparatus according to claim 5, wherein said detecting means (19,20) detects a developing performance of the developing device (1).

7. An apparatus according to claim 5 or 6, wherein changing means are provided to change a charge potential of said charger (4) and a developing bias voltage applied to said developing device (1).

8. An apparatus according to any one of claims 1 to 7, further comprising means for comparing a colour range of an original and a colour reproducing range of said image forming means (1,4).

9. An apparatus according to claim 8, further comprising means for compression processing operable when the colour range of the original is beyond the colour reproducing range of said image forming means (1,4).

**Patentansprüche**

1. Elektrofotografisches Gerät zum Herstellen eines Farbbilds, mit folgendem:

   einem elektrofotografischen lichtempfindlichen Element (3);
   einer Bilderzeugungseinrichtung (1, 4) zum Erzeugen eines Farbtonerbilds auf dem lichtempfindlichen Element (3), wobei das Tonerbild eine Bildpunktdichte hat, die innerhalb eines Bereichs von Bildpunktdichten liegt, der in Abhängigkeit eines Parameters schwankt, der die Durchführung der Bilderzeugung beeinflußt;
   einer Einrichtung zum Festlegen von Bilderzeugung-Steuerungsparametern, so daß das Tonerbild eine maximale Sollbildpunktdichte (Dmax1, Dmax2) innerhalb des Bereichs haben wird;
   einer Übertragungseinrichtung (9) zum Übertragen des Farbtonerbilds auf ein Übertragungsmaterial;
   eine Erfassungseinrichtung (19, 20) zum Erfassen des Parameters, der die Durchführung der Bilderzeugung beeinflußt; und
   einer Steuereinrichtung (116) zum Steuern der Erzeugung des Tonerbilds auf dem lichtempfindlichen Element in Abhängigkeit von dem durch die Erfassungseinrichtung erfaßten Parameter;

   **dadurch gekennzeichnet, daß**
   die Steuereinrichtung (116) dafür vorgesehen ist, die maximale Sollbildpunktdichte (Dmax1, Dmax2), die in der Festlegungseinrichtung verwendet wird, gemäß dem durch die Erfassungseinrichtung (19, 20) erfaßten Parameter zu ändern.

2. Gerät nach Anspruch 1, wobei die Erfassungseinrichtung (19, 20) geeignet ist, einen Umgebungszustand zu erfassen.

3. Gerät nach Anspruch 2, wobei die Erfassungseinrichtung (19, 20) geeignet ist, eine Umgebungsfeuchtigkeit und/oder eine Umgebungstemperatur zu erfassen.

4. Gerät nach Anspruch 1, wobei die Erfassungseinrichtung (19, 20) geeignet ist, eine Aufladungseigenschaft des elektrofotografischen lichtempfindlichen Elements (3) zu erfassen.

5. Gerät nach Anspruch 1, wobei die Bilderzeugungseinrichtung (1, 4) einen Lader (4) zum Aufladen des elektrofotografischen lichtempfindlichen Elements (3), eine Belichtungseinrichtung zum Belichten des lichtempfindlichen Elements, um ein elektrostatisches Bild zu erzeugen, und eine Entwicklungsvorrichtung (1) hat, um das elektrostatisch latente Bild mit einem Toner zu entwickeln.

6. Gerät nach Anspruch 5, wobei die Erfassungseinrichtung (19, 20) eine Entwicklungsdurchführung der Entwicklungsvorrichtung (1) erfaßt.

7. Gerät nach Anspruch 5 oder 6, wobei Wechseleinrichtungen vorgesehen sind, um ein Ladungspotential des Laders (4) und eine an der Entwicklungsvorrichtung (1) angelegte Entwicklungsvorspannung zu ändern.

8. Gerät nach einem der Ansprüche 1 bis 7, das weiterhin eine Einrichtung aufweist, um einen Farbbereich eines Originals und einen Farbkopierbereich der Bilderzeugungseinrichtung (1, 4) zu vergleichen.

9. Gerät nach Anspruch 8, weiterhin mit einer Einrichtung, die zur Kompressionsverarbeitung geeignet ist, wenn der Farbbereich des Originals jenseits des Farbkopierbereichs der Bilderzeugungseinrichtung (1, 4) liegt.

**Revendications**

1. Appareil électrophotographique pour la production d'une image en couleurs, comprenant : un élément photosensible électrophotographique (3); des moyens (1,4) de formation d'images pour former une image de toner en couleurs sur ledit élément photosensible (3), laquelle image de toner possède une densité d'image qui est située dans une gamme de densités d'images, laquelle gamme varie en fonction d'un paramètre affectant la performance de formation de l'image; des moyens pour régler des paramètres de commande de la formation d'image de telle sorte que l'image de toner possède une densité d'image maximale de consigne (Dmax1, Dmax2) dans ladite gamme, des moyens de transfert (9) pour transférer l'image de toner en couleurs sur un matériau de transfert; des moyens de détection (19,20) pour détecter le paramètre effectuant la performance de formation d'image; et des moyens de commande (116) pour commander la formation de ladite image de toner sur ledit élément photosensible en fonction du paramètre détecté par lesdits moyens de détection; caractérisé en ce que lesdits moyens de commande (116) peuvent fonctionner de manière à modifier la densité d'image maximale de consigne (Dmax1, Dmax2) utilisée dans lesdits moyens de réglage en fonction du paramètre détecté par lesdits moyens de détection (19,20).

2. Appareil selon la revendication 1, dans lequel lesdits moyens de détection (19,20) sont adaptés pour la détection d'une condition ambiante.

3. Appareil selon la revendication 2, dans lequel lesdits moyens de détection (19,20) sont adaptés pour détecter une humidité et/ou une température ambiante.

4. Appareil selon la revendication 1, dans lequel lesdits moyens de détection (19,20) sont adaptés pour détecter une propriété de charge dudit élément photosensible électrophotographique (3).

5. Appareil selon la revendication 1, dans lequel lesdits moyens (1,4) de formation d'images comprennent un dispositif de charge (4) pour charger l'élément photosensible électrophotographique (3), des moyens d'exposition pour exposer l'élément photosensible de manière à former une image électrostatique, et un dispositif de développement (1) pour développer l'image latente électrostatique avec du toner.

6. Appareil selon la revendication 5, dans lequel lesdits moyens de détection (19,20) détecte une performance de développement du dispositif de développement (1).

7. Appareil selon la revendication 5 ou 6, dans lequel des moyens de modification sont prévus pour modifier un potentiel de charge dudit dispositif de charge (4) et une tension de polarisation de développement appliquée audit dispositif de développement (1).

8. Appareil selon l'une quelconque des revendications 1 à 7, comprenant en outre des moyens pour comparer une gamme de couleurs d'un original à une gamme de reproduction de couleurs desdits moyens (1,4) de formation d'image.

9. Appareil selon la revendication 8, comprenant en outre des moyens pour réaliser un traitement de compression, qui peuvent fonctionner lorsque la gamme de couleurs de l'original se situe au-delà de la gamme de reproduction de couleurs desdits moyens (1,4) de formation d'images.

FIG. 1

EP 0 526 238 B1

FIG. 2

R    B    G    R    B
  G    R    B    G

FIG. 3

12

106 111 112 113 114

| | 6B | | B | | Y1 | | Y2 | | Y3 |
CCD | 6G | A/D | G | DENSITY | M1 | BLACK | M2 | COLOR | M3
SNSR | 6R | CNVTR CKT | R | CNVTRE CKT | C1 | EXTRACTION UCR CKT | C2 | CORRECTION CKT | C3
| | | | | | | BK2 | | BK3

200

PRNTR

# F I G. 4

F I G. 5

F I G. 6

REFL. DENSITY

USABLE DEPENDING ON AMB. CONDITION, BUT NOT USED

H. HUMIDITY

L. HUMIDITY

D LIMIT

V LIMIT

DEV. CONTRAST

## F I G. 7

b*

(Y)

D MAX (HIGH)

D MAX (LOW)

(R)

(G)

a*

(M)

(C)

(B)

## F I G. 8

15

F I G. 9

F I G. IO

F I G. 11

F I G. 12

17

FIG. 13

EP 0 526 238 B1

LUT 2

LUT 1

B

B

G

G

R

R

SMALL

LARGE

F I G. 14

FIG. 15

FIG. 16

FIG. 17

FIG. 18

FIG. 19